# DEMANDE DE BREVET EUROPEEN

(11) **EP 4 163 851 A1**
(43) Date de publication de la demande: **12.04.2023**
(21) Numéro de dépôt: 22200350.1
(22) Date de dépôt: 07.10.2022
(51) Int. Cl.: G06Q 10/10

(54) **SYSTÈME DE CONTRÔLE D'UN ÉVÉNEMENT NUMÉRIQUE HYBRIDE ET PROCÉDÉ ASSOCIÉ**

(30) Priorité: 07.10.2021 FR 2110631
(71) Demandeur: Key4events, 06300 Nice (FR)
(72) Inventeur: BLASCO, Dominique, Pierre, 06210 MANDELIEU-LA-NAPOULE (FR)
(74) Mandataire: Lavoix

(57) **Abrégé**

La présente invention concerne un système de contrôle (10) d'un événement comportant :
- une première sous-unité de contrôle (12) de l'événement organisé selon une première modalité (M1) comportant un sous-module de collection (SM_{1,1}) d'informations comportant une mesure relative à l'événement selon la première modalité (M1),
- une deuxième sous-unité de contrôle (14) de l'événement organisé selon une deuxième modalité (M2) comportant un sous-module de collection (SM_{2,1}) d'informations comportant une mesure relative à l'événement selon la deuxième modalité (M2),
- une unité de contrôle (16) comportant un module de communication (M1) communiquant avec chaque sous-unité de contrôle (12, 14) et un module de traitement (M2) traitant les informations pour déterminer des mesures portant sur l'événement, et la deuxième sous-unité de contrôle (14) et l'unité de contrôle (16) étant des serveurs situés à distance de la première sous-unité de contrôle (12).

## Description

La présente invention concerne un système de contrôle d'un événement organisé selon au moins deux modalités. Elle se rapporte également à un procédé de contrôle utilisant le système de contrôle.

Du fait de la pandémie et des confinements en résultant, le monde de l'événementiel a été bouleversé. Il n'est plus possible d'organiser des congrès en présentiel avec un nombre important de participants venant du monde entier.

De ce fait, les événements à plusieurs modalités se sont multipliés. En particulier, les événements avec deux modalités pour assister à l'événement, l'une en présentiel et l'autre à distance, se développent.

Toutefois, pour les organisateurs, le contrôle de ces événements s'avère complexe parce que les outils de contrôle connus sont destinés à des événements selon une unique modalité.

Il existe donc un système de contrôle d'un événement organisé selon au moins deux modalités qui permette de contrôler de manière aisée l'ensemble de l'événement.

A cet effet, la description décrit un système de contrôle d'un événement organisé selon au moins deux modalités, le système de contrôle comportant :
- une première sous-unité de contrôle de l'événement organisé selon une première modalité, la première sous-unité de contrôle comportant un ensemble de sous-modules parmi lesquels un sous-module de collection d'informations relatives à l'événement organisé selon la première modalité, les informations relatives à la première modalité de l'événement comportant au moins une mesure relative à l'événement selon la première modalité,
- une deuxième sous-unité de contrôle de l'événement organisé selon une deuxième modalité, la deuxième sous-unité de contrôle comportant un ensemble de sous-modules parmi lesquels un sous-module de collection d'informations relatives à l'événement organisé selon la deuxième modalité, les informations relatives à la deuxième sous-modalité de l'événement comportant au moins une mesure relative à l'événement selon la deuxième modalité,
- une unité de contrôle, l'unité de contrôle comportant un ensemble de modules parmi lesquels un module de communication et un module de traitement, le module de communication étant propre à communiquer avec chaque sous-unité de contrôle et le module de traitement étant propre à traiter les informations relatives à chaque modalité pour déterminer des mesures portant sur l'événement, et la deuxième sous-unité de contrôle et l'unité de contrôle étant des serveurs situés à distance de la première sous-unité de contrôle.

Selon des modes de réalisation particuliers, le système de contrôle présente une ou plusieurs des caractéristiques suivantes, prise(s) isolément ou selon toutes les combinaisons techniquement possibles :
- les modules de l'unité de contrôle et les sous-modules sont propres à communiquer selon un protocole de transfert hypertexte.
- chaque module et chaque sous-module présentent un état activé et un état désactivé, l'état de chaque module et de chaque sous-module étant contrôlable par l'unité de contrôle.
- la première sous-unité de contrôle est propre à envoyer des requêtes à l'unité de contrôle par utilisation d'une interface de programmation applicative.
- les informations relatives à la première modalité comportent le nombre de personnes assistant audit événement selon la première modalité et les informations relatives à la deuxième modalité comportent le nombre de personnes assistant audit événement selon la deuxième modalité.
- l'unité de contrôle comporte un module statistique, le module statistique étant propre à appliquer des fonctions statistiques, notamment des techniques d'intelligence artificielle, sur les mesures portant sur l'événement pour obtenir des informations statistiques relatives à l'événement.
- les sous-modules de la première sous-unité de contrôle comportent au moins un sous-module choisi parmi un sous-module propre à générer des badges, un sous-module de contrôle d'accès à l'événement et un sous-module de diffusion des présentations scientifiques réalisées dans le cadre de l'événement.
- les sous-modules de la deuxième sous-unité de contrôle comportent au moins un sous-module choisi parmi un sous-module propre de mise en ligne des services hybrides, un sous-module de gestion des présentations scientifiques réalisées dans le cadre de l'événement, un sous-module de contrôle d'accès à l'événement, un sous-module de réalisation d'exposition virtuelle, un sous-module de diffusion de contenu media et un sous-module de gestion de publicités.
- la première modalité est une modalité en présentiel dans un lieu donné, la première sous-unité de contrôle étant positionnée dans le lieu donné.

La description décrit également un procédé de contrôle d'un événement organisé selon au moins deux modalités par un système de contrôle, le système de contrôle comportant :
- une première sous-unité de contrôle de l'événement organisé selon une première modalité, la première sous-unité de contrôle comportant un ensemble de sous-modules parmi lesquels un sous-module de collection d'informations relatives à l'événement organisé selon la première modalité, les informations relatives à la première modalité de l'événement comportant au moins une mesure relative à l'événement selon la première modalité,
- une deuxième sous-unité de contrôle de l'événement organisé selon une deuxième modalité, la deuxième sous-unité de contrôle comportant un ensemble de sous-modules parmi lesquels un sous-module de collection d'informations relatives à l'événement organisé selon la deuxième modalité, les informations relatives à la deuxième sous-modalité de l'événement comportant au moins une mesure relative à l'événement selon la deuxième modalité,
- une unité de contrôle, l'unité de contrôle comportant un ensemble de modules parmi lesquels un module de communication et un module de traitement, le module de communication étant propre à communiquer avec chaque sous-unité de contrôle et le module de traitement étant propre à traiter les informations relatives à chaque modalité pour déterminer des mesures portant sur l'événement, et

la deuxième sous-unité de contrôle et l'unité de contrôle étant des serveurs situés à distance de la première sous-unité de contrôle,
le procédé comportant :
   - une première étape de collection d'au moins une mesure relative à la première modalité par la première sous-unité de contrôle, pour obtenir au moins une première mesure collectée,
   - une première étape d'envoi de l'au moins une première mesure collectée à destination de l'unité de contrôle,
   - une deuxième étape de collection d'au moins une mesure relative à la deuxième modalité par la deuxième sous-unité de contrôle, pour obtenir au moins une deuxième mesure collectée,
   - une deuxième étape d'envoi de l'au moins une deuxième mesure collectée à destination de l'unité de contrôle,
   - une étape de réception par l'unité de contrôle de l'au moins une première mesure collectée et de l'au moins une deuxième mesure collectée, et
   - une étape de traitement par l'unité de contrôle de l'au moins une première mesure collectée et de l'au moins une deuxième mesure collectée pour déterminer des mesures portant sur l'événement.

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique de l'architecture d'un système de contrôle, et
- la figure 2 est une représentation schématique d'un exemple de procédé de contrôle d'un événement mixte utilisant le système de contrôle de la figure 1.

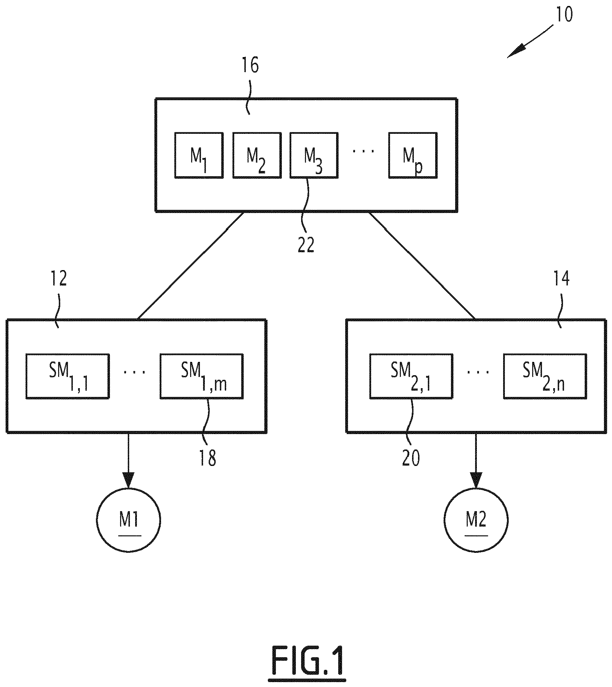

Un exemple d'architecture d'un système de contrôle 10 d'un événement mixte est illustré schématiquement sur la figure 1.

Un événement mixte est un événement organisé selon au moins deux modalités M1 et M2.

A titre d'exemple, un événement mixte est un événement ayant lieu à la fois en présentiel et en virtuel. Dans un tel cas, la première modalité M1 est le présentiel et la deuxième modalité M2 est le virtuel.

Selon un autre exemple, il peut être envisagé que l'événement ait lieu à plusieurs endroits physiques, chaque endroit physique correspondrait alors à une modalité. Il pourrait ainsi être envisagé une configuration dans laquelle, autant de modalités qu'il y a de lieux en comptant le virtuel comme un lieu.

Dans la suite, à titre d'exemple non limitatif, il est décrit un événement mixte avec une première modalité M1 en présentiel et une deuxième modalité M2 en virtuel.

Le système de contrôle 10 permet de contrôler l'événement en offrant des fonctionnalités de gestion, de mesure, d'analyse ou de surveillance.

Le système de contrôle 10 peut donc être vu comme un système de gestion, un système de mesure, un système d'analyse ou encore un système de surveillance.

Pour cela, le système de contrôle 10 comporte une première sous-unité de contrôle 12, une deuxième sous-unité de contrôle 14 et une unité de contrôle 16.

La première sous-unité de contrôle 12 est une sous-unité de contrôle de l'événement organisé selon la première modalité M1.

Dans l'exemple décrit, la première modalité M1 étant le présentiel, la première sous-unité de contrôle 12 sera dénommée dans la suite «sous-unité de contrôle du présentiel 12 » et la première modalité M1 sera dénommée « modalité présentielle ».

La sous-unité de contrôle du présentiel 12 comporte un ensemble de sous-modules 18.

Chaque sous-module 18 de la sous-unité de contrôle du présentiel 12 assure une fonction spécifique.

Il peut s'agir d'inscription, de contrôle d'accès, de traçabilité, d'accréditations et de badges, de diffusion de média et de gestion des opportunités business, cette liste n'étant pas restrictive.

En notant m le nombre de sous-modules 18 de la sous-unité de contrôle du présentiel 12 (avec m un nombre entier non nul), les sous-modules 18 peuvent être associés au signe de référence SM_{1,i}, i étant un indice compris entre 1 et m et dépendant du sous-module SM considéré.

Ici, la sous-unité de contrôle du présentiel 12 comporte un sous-module de collection SM_{1,1} d'informations relatives à l'événement organisé en présentiel. Pour simplifier la dénomination, ce sous-module de collection SM_{1,1} peut être dénommé sous-module présentiel de collection SM_{1,1}.

En l'espèce, le sous-module présentiel de collection SM_{1,1} est propre à collecter des informations relatives à l'événement organisé en présentiel.

Parmi ces informations, au moins une mesure relative à l'événement selon la modalité présentielle est présente.

Par exemple, le sous-module présentiel de collection SM_{1,1} collecte le nombre de personnes assistant au dit événement en présentiel.

Il peut s'agir ici du nombre de participants présents à une session, du nombre de badges imprimés par catégorie, du nombre d'inscrits sur place, cette liste n'étant pas exhaustive.

En outre, la sous-unité de contrôle du présentiel 12 est positionnée dans le lieu où a lieu l'événement.

Par exemple, la sous-unité de contrôle du présentiel 12 est un terminal, comme un ordinateur ou un ordinophone (plus souvent désigné selon l'appellation anglaise correspondante de « *smartphone* »)*.*

Des remarques similaires s'appliquent pour la deuxième sous-unité de contrôle 14.

Ainsi, la deuxième sous-unité de contrôle 14 est une sous-unité de contrôle de l'événement organisé selon la deuxième modalité M2.

Dans l'exemple décrit, la deuxième modalité M2 étant le virtuel, la deuxième sous-unité de contrôle 14 sera dénommée dans la suite « sous-unité de contrôle du virtuel 14 » et la deuxième modalité sera dénommée « modalité virtuelle M2».

La sous-unité de contrôle du virtuel 14 comporte un ensemble de sous-modules 20.

Chaque sous-module 20 de la sous-unité de contrôle du virtuel 14 assure une fonction spécifique.

Il peut s'agir, par exemple, de la gestion de l'exposition virtuelle, des réseaux sociaux professionnels, des conférences virtuelles, de la traçabilité et des contrôles d'accès, des inscriptions, cette liste n'étant pas exhaustive.

En notant n le nombre de sous-modules 20 de la sous-unité de contrôle du virtuel 14 (avec n un nombre entier non nul), les sous-modules 20 peuvent être associés au signe de référence SM_{2,j}, j étant un indice compris entre 1 et n et dépendant du sous-module SM considéré.

A priori, il n'y a aucune raison pour que le nombre n de sous-modules SM de la sous-unité de contrôle du virtuel 14 soit le même que le nombre m de sous-modules SM de la sous-unité de contrôle du présentiel 12.

Ici, la sous-unité de contrôle du virtuel 14 comporte un sous-module de collection SM_{2,1} d'informations relatives à l'événement organisé en virtuel. Pour simplifier la dénomination, ce sous-module de collection SM_{2,1} peut être dénommé sous-module virtuel de collection SM_{2,1}.

En l'espèce, le sous-module virtuel de collection SM_{2,1} est propre à collecter des informations relatives à l'événement organisé en virtuel.

Parmi ces informations, au moins une mesure relative à l'événement selon la modalité virtuelle est présente.

Par exemple, le sous-module virtuel de collection SM_{2,1} collecte le nombre de personnes assistant au dit événement en virtuel.

Le nombre de participants présents à une session, le nombre d'inscrits en ligne, le nombre de connexions par catégorie d'inscrits, cette liste n'étant pas exhaustive.

Dans l'exemple décrit, la sous-unité de contrôle du virtuel 14 et l'unité de contrôle 16 sont des serveurs situés à distance de la première sous-unité de contrôle 12.

De préférence, la sous-unité de contrôle du virtuel 14 et l'unité de contrôle 16 sont situés dans la même ferme de serveurs.

Dans l'hypothèse où l'événement est organisé avec d'autres modalités, le système de contrôle 10 comportera autant de sous-unité de contrôle que de modalités.

En outre, selon l'exemple décrit, pour chaque modalité en présentiel dans un lieu donné, la sous-unité de contrôle associée sera située sur le lieu donné.

L'unité de contrôle 16 est propre à contrôler chaque sous-unité de contrôle 12, 14.

L'unité de contrôle 16 comporte un ensemble de modules 22.

En notant p le nombre de modules (avec p un nombre entier non nul, chaque module Mₖ peut être repéré par un indice k, c'est-à-dire un nombre entier compris entre 1 et p.

Selon l'exemple décrit, l'unité de contrôle 16 comporte un module de communication M₁, un module de traitement M₂ et un module statistique M₃.

Le module de communication M₁ est propre à communiquer avec chaque sous-unité de contrôle 12 et 14.

Le module de traitement M₂ est propre à traiter les informations relatives à chaque modalité M1 et M2 pour déterminer des mesures portant sur l'événement.

Ces mesures sont consolidées dans la mesure où le module de traitement M₂ contrôle les informations relatives à chaque modalité M1 et M2 pour s'assurer de leur cohérence et faire en sorte, par exemple, qu'il n'existe aucune redondance entre les informations.

Typiquement, il ne faudrait pas qu'une personne ayant assisté à la fois en présentiel et en virtuel soit comptabilisée deux fois.

Le module statistique M₃ est propre à appliquer des fonctions statistiques sur les mesures portant sur l'événement pour obtenir des informations statistiques relatives à l'événement.

Par exemple, le module statistique M₃ pourra fournir le nombre de participants moyen, une corrélation entre la présence de certains types d'exposants et le nombre de participants ou encore le pourcentage de progression des ventes.

Pour améliorer ces indications fournies par le module de statistique M₃, le module statistique M₃ utilise comme fonction statistique une technique d'intelligence artificielle, comme un réseau de neurones ou un algorithme entraîné par un apprentissage supervisé.

Cela permettra, par exemple, d'obtenir un profilage déclaratif et comportemental dans le cadre de recommandations de médias et de mises en relation.

Selon l'exemple décrit, le système de contrôle 10 présente l'avantage de permettre à l'utilisateur de bénéficier d'une adaptabilité remarquable.

Pour cela, chaque module M et chaque sous-module SM présentent un état activé et un état désactivé.

Cela permet de sélectionner uniquement le(s) module(s) M et le(s) sous-module(s) SM adaptés pour son besoin.

A titre d'exemple, l'état de chaque module M et de chaque sous-module SM sont contrôlés par l'unité de contrôle 16.

En outre, lorsque les modules M de l'unité de contrôle 16 sont propres à communiquer entre eux et que similairement les sous-modules SM sont propres à communiquer entre eux, un tel contrôle peut simplement prendre la forme d'une inhibition ou d'une activation de la communication.

De préférence, les protocoles utilisés pour de telles communications ne sont pas quelconques.

A titre d'exemple, un protocole utilisé est le protocole de transfert hypertexte. Un tel protocole est plus souvent désigné par l'abréviation HTTP qui renvoie à la dénomination anglaise correspondante de « *Hypertext Transfer Protocol* »*.*

En complément, le protocole utilisé pour les communications inter-modules est le GRPC et les communications publiques se font via APIs.

L'abréviation GRPC renvoie à la dénomination anglaise correspondante de « Google Remote Procédure Call » qui signifie littéralement procédure d'appel lointain de Google.

Par ailleurs, une interface de programmation applicative est plus souvent désigné selon l'abréviation API qui renvoie à la dénomination anglaise correspondante d'« Application Programming Interface » de type REST. L'abréviation REST renvoie à la dénomination anglaise correspondante à « Representational State Transfer Application Program Interface » qui signifie littéralement interface de programmation applicative à transfert de représentation d'état.

Pour l'utilisateur, une manière d'ajouter ou de supprimer un module M et/ou un sous-module SM est d'envoyer une requête à l'unité de contrôle 16 en utilisant une interface de programmation applicative présente dans la première sous-unité de contrôle 12.

Cela permet également de réaliser le système de contrôle 10 sous forme de Saas. L'abréviation SaaS renvoie à la dénomination anglaise correspondante de « *Software* as as a *service* » qui signifie littéralement logiciel comme un service.

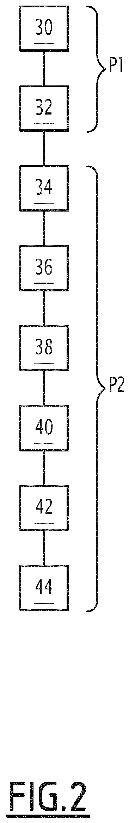

En référence à l'ordinogramme de la figure 2, il est maintenant décrit un exemple d'utilisation du système de contrôle 10 par la présentation d'un exemple de mise en oeuvre d'un procédé de contrôle de l'événement.

Pour simplifier la description qui va suivre, il va être supposé que l'utilisateur a uniquement besoin de déterminer le nombre exact de personnes présentes selon les deux modalités M1 et M2.

Le procédé comporte deux phases P1 et P2.

La première phase P1 est une phase de préparation de l'événement. Cette phase de préparation est notamment mise en oeuvre juste avant le début de l'événement, par exemple quelques jours avant le début de l'événement.

La première phase P1 comporte, par exemple, une étape d'envoi d'une requête 30 et une étape d'activation 32.

Lors de l'étape d'envoi d'une requête 30, l'utilisateur va demander l'activation des modules M et sous-modules SM dont il a besoin.

Cette requête peut prendre la forme d'une fonctionnalité générale, l'utilisateur venant alors demander la fonctionnalité de comptage des personnes présentes en sélectionnant celle-ci sur une interface homme-machine de l'unité de contrôle 16.

Lors de l'étape d'activation 32, l'unité de contrôle 16 reçoit la requête et active ici le module de communication M₁, le module de traitement M₂ et les sous-modules de collection SM_{1,1} et SM_{2,1}.

La deuxième phase P2 peut alors être mis en œuvre.

Dans l'exemple décrit, la deuxième phase P2 comporte une première étape de collection 34, une première étape d'envoi 36, une deuxième étape de collection 38, une deuxième étape d'envoi 40, une étape de réception 42 et une étape de traitement 44.

Lors de la première étape de collection 34, le premier sous-module de collection SM_{1,1} collecte les mesures de nombre de personnes présentes en présentiel.

Par exemple, chaque scan d'une invitation à l'événement par un membre du personnel de la société organisatrice est enregistré. Cela constitue une première mesure collectée.

Lors de la première étape d'envoi 36, la sous-unité de contrôle en présentiel 12 envoie la première mesure collectée à destination de l'unité de contrôle 16.

Similairement, lors de la deuxième étape de collection 38, le sous-module de collection en virtuel 14 collecte les mesures de nombre de personnes présentes en virtuel.

Par exemple, chaque connexion à l'événement est enregistrée. Cela constitue une deuxième mesure collectée.

Lors de la deuxième étape d'envoi 38, la sous-unité de contrôle en virtuel 14 envoie la deuxième mesure collectée à destination de l'unité de contrôle 10.

Lors de l'étape de réception 40, l'unité de contrôle 16 reçoit à la fois la première mesure ainsi que la deuxième mesure.

Ensuite, l'unité de contrôle 16 traite les deux mesures.

Par exemple, l'unité de contrôle 16 va détecter les éventuelles redondances dans les mesures, notamment une personne présente le matin en présentiel et l'après-midi en virtuel doit être comptée comme une seule personne. Similairement, une personne ayant cliquée plusieurs fois sur le lien de connexion à l'événement dans la même journée doit être comptée comme une seule personne.

Cela permet d'obtenir une mesure du nombre de personnes très fiable.

A travers cet exemple, il a été montré que le système de contrôle 10 permet de contrôler de manière aisée l'ensemble de l'événement.

En outre, le système de contrôle 10 présente une adaptabilité très importante.

De plus, la préparation du système de contrôle 10 est très simple puisqu'il suffit que l'utilisateur sélectionne les fonctionnalités dont il a besoin. En particulier, il n'est plus nécessaire d'installer un outil pour chaque fonctionnalité voulue.

Enfin, notamment grâce aux avantages précités, le système de contrôle 10 proposé est adapté à être utilisé par un organisateur d'événement pour chaque événement qu'il organise. Celui-ci aura uniquement à demander les fonctionnalités adaptées à l'événement en cours d'organisation.

A titre d'exemple, il pourra être choisi des sous-modules SM_{1,1}, ..., SM_{1,n} de la première sous-unité de contrôle 12 parmi un sous-module propre à générer des badges, un sous-module de contrôle d'accès à l'événement ou un sous-module de diffusion des présentations scientifiques réalisées dans le cadre de l'événement.

Similairement, il pourra être choisi des sous-modules SM_{2,1}, ..., SM_{2,m} de la deuxième sous-unité de contrôle 14 parmi un sous-module propre de mise en ligne des services hybrides, un sous-module de gestion des présentations scientifiques réalisées dans le cadre de l'événement, un sous-module de contrôle d'accès à l'événement, un sous-module de réalisation d'exposition virtuelle, un sous-module de diffusion de contenu media et un sous-module de gestion de publicités.

Le système de contrôle 10 qui vient d'être décrit n'est pas limité au mode de réalisation spécifique décrit. En particulier, toute combinaison de module(s) et sous-module(s) et par là de fonctionnalités est envisageable.

## Revendications

1. Système de contrôle (10) d'un événement organisé selon au moins deux modalités (M1, M2), le système de contrôle (10) comportant :
- une première sous-unité de contrôle (12) de l'événement organisé selon une première modalité (M1), la première sous-unité de contrôle (12) comportant un ensemble de sous-modules (SM_{1,1}, ..., SM_{1,m}) parmi lesquels un sous-module de collection (SM_{1,1}) d'informations relatives à l'événement organisé selon la première modalité (M1), les informations relatives à la première modalité (M1) de l'événement comportant au moins une mesure relative à l'événement selon la première modalité (M1),
- une deuxième sous-unité de contrôle (14) de l'événement organisé selon une deuxième modalité (M2), la deuxième sous-unité de contrôle (14) comportant un ensemble de sous-modules (SM_{2,1}, ..., SM_{2,n}) parmi lesquels un sous-module de collection (SM_{2,1}) d'informations relatives à l'événement organisé selon la deuxième modalité (M2), les informations relatives à la deuxième sous-modalité (M2) de l'événement comportant au moins une mesure relative à l'événement selon la deuxième modalité (M2),
- une unité de contrôle (16), l'unité de contrôle (16) comportant un ensemble de modules (M₁, ..., Mₚ) parmi lesquels un module de communication (M₁) et un module de traitement (M₂), le module de communication (M₁) étant propre à communiquer avec chaque sous-unité de contrôle (12, 14) et le module de traitement (M₂) étant propre à traiter les informations relatives à chaque modalité (M1, M2) pour déterminer des mesures portant sur l'événement, et
la deuxième sous-unité de contrôle (14) et l'unité de contrôle (16) étant des serveurs situés à distance de la première sous-unité de contrôle (12).

2. Système de contrôle d'un événement selon la revendication 1, dans lequel les modules (M₁, ..., Mₖₚ) de l'unité de contrôle (16) et les sous-modules (SM_{1,1}, ..., SM_{1,m}, SM_{2,1}, ..., SM_{2,n}) sont propres à communiquer selon un protocole de transfert hypertexte.

3. Système de contrôle d'un événement selon la revendication 1 ou 2, dans lequel chaque module (M₁, ..., Mₚ) et chaque sous-module (SM_{1,1}, ..., SM_{1,m}, SM_{2,1}, ..., SM_{2,n}) présentent un état activé et un état désactivé, l'état de chaque module (M₁, ..., Mₚ) et de chaque sous-module (SM_{1,1}, ..., SM_{1,m}, SM_{2,1}, ..., SM_{2,n}) étant contrôlable par l'unité de contrôle (16).

4. Système de contrôle d'un événement selon l'une quelconque des revendications 1 à 3, dans lequel la première sous-unité de contrôle (12) est propre à envoyer des requêtes à l'unité de contrôle (16) par utilisation d'une interface de programmation applicative.

5. Système de contrôle d'un événement selon l'une quelconque des revendications 1 à 4, dans lequel les informations relatives à la première modalité (M1) comportent le nombre de personnes assistant audit événement selon la première modalité (M1) et les informations relatives à la deuxième modalité (M2) comportent le nombre de personnes assistant audit événement selon la deuxième modalité (M2).

6. Système de contrôle d'un événement selon l'une quelconque des revendications 1 à 5, dans lequel l'unité de contrôle (16) comporte un module statistique (M₃), le module statistique (M₃) étant propre à appliquer des fonctions statistiques, notamment des techniques d'intelligence artificielle, sur les mesures portant sur l'événement pour obtenir des informations statistiques relatives à l'événement.

7. Système de contrôle d'un événement selon l'une quelconque des revendications 1 à 6, dans lequel les sous-modules (SM_{1,1}, ..., SM_{1,m}) de la première sous-unité de contrôle (12) comportent au moins un sous-module choisi parmi un sous-module propre à générer des badges, un sous-module de contrôle d'accès à l'événement et un sous-module de diffusion des présentations scientifiques réalisées dans le cadre de l'événement.

8. Système de contrôle d'un événement selon l'une quelconque des revendications 1 à 7, dans lequel les sous-modules (SM_{2,1}, ..., SM_{2,n}) de la deuxième sous-unité de contrôle (14) comportent au moins un sous-module choisi parmi un sous-module propre de mise en ligne des services hybrides, un sous-module de gestion des présentations scientifiques réalisées dans le cadre de l'événement, un sous-module de contrôle d'accès à l'événement, un sous-module de réalisation d'exposition virtuelle, un sous-module de diffusion de contenu media et un sous-module de gestion de publicités.

9. Système de contrôle d'un événement selon l'une quelconque des revendications 1 à 8, dans lequel la première modalité (M1) est une modalité en présentiel dans un lieu donné, la première sous-unité de contrôle (12) étant positionnée dans le lieu donné.

10. Procédé de contrôle d'un événement organisé selon au moins deux modalités (M1, M2) par un système de contrôle (10), le système de contrôle (10) comportant :
- une première sous-unité de contrôle (12) de l'événement organisé selon une première modalité (M1), la première sous-unité de contrôle (12) comportant un ensemble de sous-modules (SM_{1,1}, ..., SM_{1,m}) parmi lesquels un sous-module de collection (SM_{1,1}) d'informations relatives à l'événement organisé selon la première modalité (M1), les informations relatives à la première modalité (M1) de l'événement comportant au moins une mesure relative à l'événement selon la première modalité (M1),
- une deuxième sous-unité de contrôle (14) de l'événement organisé selon une deuxième modalité (M2), la deuxième sous-unité de contrôle (14) comportant un ensemble de sous-modules (SM_{2,1}, ..., SM_{2,n}) parmi lesquels un sous-module de collection (SM_{2,1}) d'informations relatives à l'événement organisé selon la deuxième modalité (M2), les informations relatives à la deuxième sous-modalité (M2) de l'événement comportant au moins une mesure relative à l'événement selon la deuxième modalité (M2),
- une unité de contrôle (16), l'unité de contrôle (16) comportant un ensemble de modules (M₁, ..., Mₚ) parmi lesquels un module de communication (M₁) et un module de traitement (M₂), le module de communication (M₁) étant propre à communiquer avec chaque sous-unité de contrôle (12, 14) et le module de traitement (M₂) étant propre à traiter les informations relatives à chaque modalité (M1, M2) pour déterminer des mesures portant sur l'événement, et
la deuxième sous-unité de contrôle (14) et l'unité de contrôle (16) étant des serveurs situés à distance de la première sous-unité de contrôle (12),
le procédé comportant :
- une première étape de collection d'au moins une mesure relative à la première modalité (M1) par la première sous-unité de contrôle (12), pour obtenir au moins une première mesure collectée,
- une première étape d'envoi de l'au moins une première mesure collectée à destination de l'unité de contrôle (16),
- une deuxième étape de collection d'au moins une mesure relative à la deuxième modalité (M2) par la deuxième sous-unité de contrôle (14), pour obtenir au moins une deuxième mesure collectée,
- une deuxième étape d'envoi de l'au moins une deuxième mesure collectée à destination de l'unité de contrôle (16),
- une étape de réception par l'unité de contrôle (16) de l'au moins une première mesure collectée et de l'au moins une deuxième mesure collectée, et
- une étape de traitement par l'unité de contrôle (16) de l'au moins une première mesure collectée et de l'au moins une deuxième mesure collectée pour déterminer des mesures portant sur l'événement.
